(19) Europäisches Patentamt
European Patent Office
Office européen des brevets

(11) **EP 2 896 599 A1**

(12) **EUROPEAN PATENT APPLICATION**
published in accordance with Art. 153(4) EPC

(43) Date of publication:
**22.07.2015 Bulletin 2015/30**

(51) Int Cl.:
*C01F 5/08* (2006.01)  *C01F 5/20* (2006.01)
*C08K 3/22* (2006.01)

(21) Application number: **13836573.9**

(22) Date of filing: **13.09.2013**

(86) International application number:
**PCT/JP2013/075391**

(87) International publication number:
**WO 2014/042287 (20.03.2014 Gazette 2014/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2012 JP 2012201102**
**31.10.2012 JP 2012239955**

(71) Applicant: **Kyowa Chemical Industry Co., Ltd**
**Takamatsu-shi, Kagawa 761-0113 (JP)**

(72) Inventors:
• **KOBASHI, Kenichi**
  **Sakaide-shi**
  **Kagawa 762-0012 (JP)**
• **BABA, Hideaki**
  **Sakaide-shi**
  **Kagawa 762-0012 (JP)**
• **MURAO, Masaya**
  **Sakaide-shi**
  **Kagawa 762-0012 (JP)**

(74) Representative: **Raynor, Stuart Andrew**
**J A Kemp**
**14 South Square**
**Gray's Inn**
**London WC1R 5JJ (GB)**

(54) **LOOSELY AGGREGATED THIN FILM MAGNESIUM OXIDE PARTICLES**

(57) It is an object of the present invention to provide magnesium oxide particles which have a high aspect ratio and are loosely aggregated.

The present invention is the magnesium oxide particles have an aspect ratio measured by a scanning probe microscope of 3 to 10.

Fig. 2

Printed by Jouve, 75001 PARIS (FR)

**Description**

TECHNICAL FIELD

The present invention relates to magnesium oxide particles which have a high aspect ratio and are loosely aggregated.

BACKGROUND ART

Magnesium oxide particles are obtained by calcining magnesium hydroxide and have been used in various fields for a long time.

In recently years, super high-quality magnesium oxide, especially magnesium oxide having high purity and very high dispersibility has been desired for use in thin film electronic materials, ceramics for optical use and dielectric ceramics.

High-purity magnesium oxide can be produced by reacting a magnesium-containing basic mineral or basic magnesium compound in an aqueous suspension state with carbon dioxide, separating insoluble impurities from the obtained magnesium bicarbonate aqueous solution to obtain a clear magnesium bicarbonate aqueous solution, decomposing it to obtain magnesium carbonate and calcinating it (Patent Document 1). It can also be produced by adding ammonia to a magnesium chloride aqueous solution (Patent Document 2). Patent Documents 1 and 2 concern only about the purity of magnesium oxide and do not mention physical properties thereof such as dispersibility and aspect ratio which are required for thin film electronic materials and ceramics for optical use.

Patent Document 3 discloses plate-like lamellar crystalline magnesium oxide having an aspect ratio of 10 or more. However, since this magnesium oxide is lamellar and has a high aspect ratio, it is bulky and has poor workability. For example, when it is kneaded into a resin or mixed with slurry, its viscosity becomes high, thereby reducing its workability.

(Patent Document 1) JP-A 58-60616
(Patent Document 2) JP-A 61-209911
(Patent Document 3) JP-A 2012-89470

DISCLOSURE OF THE INVENTION

It is an object of the present invention to provide magnesium oxide which has high dispersibility and excellent workability with a high aspect ratio of 3 to 10 when it is mixed with a synthetic resin, ceramic or coating agent though it loosely aggregate.

The inventors of the present invention conducted intensive studies to attain the above object and found that magnesium oxide particles which loosely aggregate and have an aspect ratio of 3 to 10 are obtained by calcining specific magnesium hydroxide at a specific temperature under specific conditions.

That is, the present invention is magnesium oxide particles which have an aspect ratio measured by a scanning probe microscope of 3 to 10.

BRIEF DESCRIPTION OF THE DRAWINGS

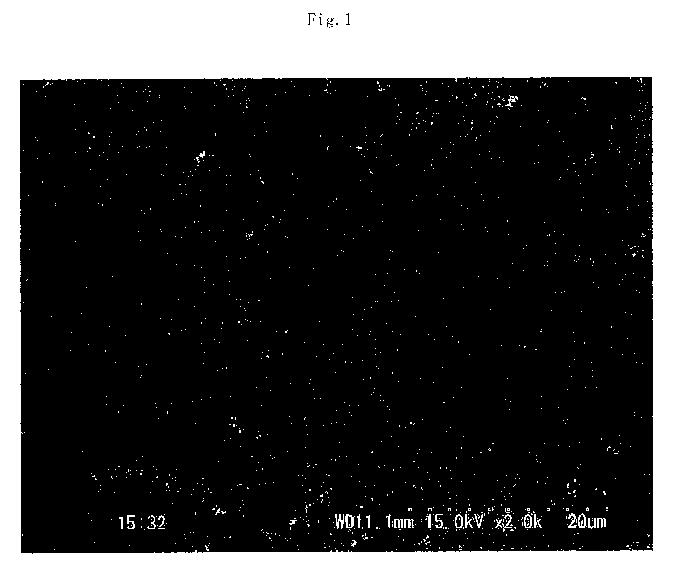

Fig. 1 is a SEM photomicrograph of a magnesium oxide particle obtained in Example (2,000 magnifications);
Fig. 2 shows a method of measuring the aspect ratio by a scanning probe microscope; and
Fig. 3 is a diagram of a stirrer equipped with a thermostat bath used for the measurement of CAA (Citric Acid Activity).

BEST MODE FOR CARRYING OUT THE INVENTION

The present invention will be described in detail hereinunder.

<magnesium oxide particles>

The magnesium oxide particles of the present invention have a small bulk and do not increase in viscosity and therefore have high workability.

The aspect ratio of each of the magnesium oxide particles of the present invention is 3 to 10, preferably 4 to 8. When the aspect ratio is 3 or less, the particle becomes a cubic particle, thereby reducing its additional value to a material to be used therewith. When the aspect ratio is 10 or more, it becomes bulky, thereby deteriorating in workability. The aspect ratio is an average value calculated from aspect ratios (width/height) obtained from the widths and heights in a vertical direction (C-D direction) of five particles and aspect ratios (width/height) obtained from the widths and heights in a transverse direction (A-B direction) of the particles by a scanning probe microscope.

The magnesium oxide particles of the present invention have a ratio of the %90 value of the particle size measured in a water solvent to the %10 value of the particle size measured after an ultrasonic treatment in the water solvent by a laser diffraction scattering method of preferably 15 or more, more preferably 18 or more, much more preferably 20 or more. When the ratio is 15 or more, the particles have orientation characteristic of high-aspect ratio particles and therefore high dispersibility.

The BET specific surface area of the magnesium oxide particles of the present invention is preferably 5 to 30 $m^2/g$, more preferably 7 to 28 $m^2/g$, much more preferably 10 to 25 $m^2/g$. When the BET specific surface area is 5 $m^2/g$ or more, the magnesium oxide particles have high activity and can be used for various purposes and when the BET specific surface area is 30 $m^2/g$ or more, they have low hydration property.

The 40% value at 30°C of CAA (Citric Acid Activity) of the magnesium oxide particles of the present invention is preferably 40 to 120 seconds, more preferably 50 to 110 seconds, much more preferably 60 to 100 seconds. When the 40% value is 40 seconds or longer, the reactivity is not too high and when the 40% value is 120 seconds or shorter, acid acception property and reactivity become high.

The bulk specific gravity of the magnesium oxide particles of the present invention is preferably 0.15 to 0. 35 g/mL, more preferably 0.18 to 0.32 g/mL, much more preferably 0.20 to 0.30 g/mL. When the bulk specific gravity is 0.15 or more, the particles are not so bulky and therefore have high workability. When the bulk specific gravity is 0.35 g/mL or less, they have low aggregation property and therefore high dispersibility.

<Production of magnesium oxide particles>

The magnesium oxide particles of the present invention are obtained by calcining specific magnesium hydroxide and grinding it.

The raw material magnesium hydroxide can be produced by reacting magnesium nitrate with ammonia water in an equivalent ratio of 0.5 to 3.0 at 15 to 50°C, heating the reaction product at 55 to 99°C or hydrothermally treating the reaction product at 100 to 150°C, filtering the treated product, rinsing and drying it. The raw material magnesium hydroxide has a BET specific surface area of 50 $m^2/g$ or less and a %50 value of the particle size of 20 $\mu$m or less.

Calcination may be carried out by a known method. The calcined magnesium oxide particles are ground to obtain magnesium oxide having a BET specific surface area of 30 $m^2/g$ or less.

EXAMPLES

The following examples are provided to further illustrate the present invention.

1. Characteristic property values

The (a) aspect ratio, (b) particle size obtained by measuring the powder by a laser diffraction scattering method, (c) particle size measured after an ultrasonic treatment by the laser diffraction scattering method, (d) BET specific surface area, (e) bulk specific gravity, (f) adhesion strength and (h) CAA (Citric Acid Activity) mean values measured by the following methods.

(a) Aspect ratio:

The average aspect ratio was obtained by observing each particle through the SFT-3500 SPM (Scanning Probe Microscope) of Shimadzu Corporation to measure the width and the height 5 times.

The widths and thicknesses in the C-D direction and the A-B direction of each particle were measured to obtain the average value of the aspect ratios (width/thickness) in these directions as the aspect ratio of the particle. The aspect ratios of five particles were measured to obtain the average value.

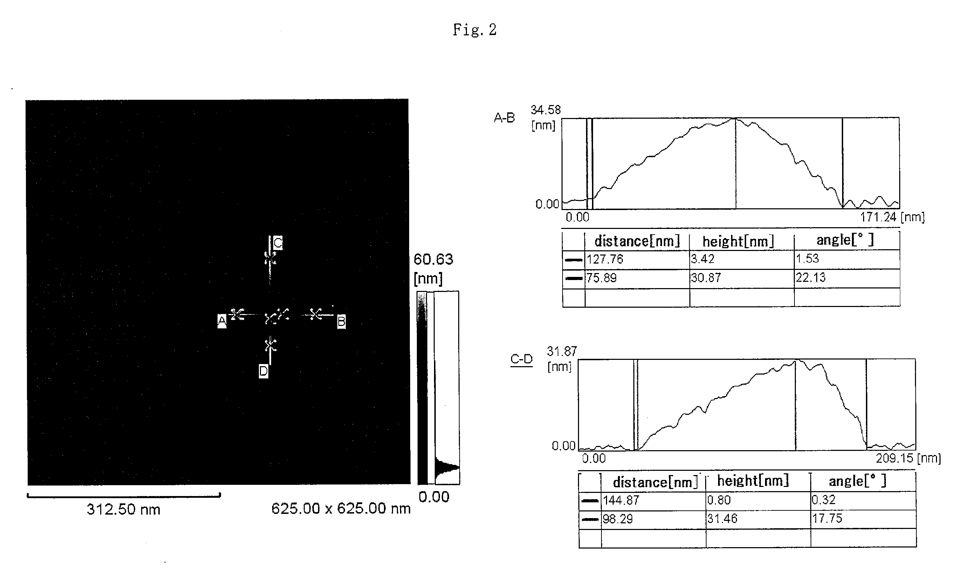

Stated more specifically, the particle shown in Fig. 2 had a length of 144.87 nm and a thickness of 31.46 nm in the C-D direction and therefore an aspect ratio of 4.6. The particle had a length of 127.76 nm and a thickness of 30.87 nm in the A-B direction and therefore an aspect ratio of 4.1. The average value of 4.6 and 4.1 is 4.35 which is taken as the aspect ratio of the particle.

The above measurement was made on five particles, and the average value of these particles is taken as the aspect ratio.

(b) Particle size obtained by measuring the powder by laser diffraction scattering method:

A solvent (water) was injected into the VSR circulator by using the Microtrack HRA particle size analyzer of Nikkiso Co. , Ltd. , and a suitable amount of a sample powder was added to measure the particle size twice after 3 minutes so as to obtain an average particle size.

(c) Particle size measured after ultrasonic treatment by laser diffraction scattering method:

A solvent (water or a sodium hexametaphosphate aqueous solution) was injected into the VSR circulator by using the Microtrack HRA particle size analyzer of Nikkiso Co., Ltd., and 0.7 g of the sample powder was added to 70 mL of the solvent (water or a sodium hexametaphosphate aqueous solution) to carry out an ultrasonic treatment on the resulting solution with an ultrasonic apparatus ($280 \pm 10$ $\mu$A) for 3 minutes so as to prepare a sample solution. A suitable amount of the sample solution was added to measure the particle size twice after 1 minute so as to obtain an average particle size.

(d) BET specific surface area:

This was measured in accordance with the method described in the magazine "Catalyst" (vol. 2, No. 4, p. 473, 1960 Tokuji Takagi).

(e) Bulk specific gravity:

10.0g of the sample was weighed and slowly poured into a 100 mL glass measuring cylinder to obtain an inverse number of the read value (mL).

(f) Adhesion strength:

The adhesion strength was measured by the following operation.

1. Operation

(1) The temperature of pure water is adjusted to 30°C, and 150 mL of the pure water is sampled and put into a mixer.
(2) 20 g of magnesium oxide particles is weighed by an electronic balance, put into the mixer, left for 30 seconds and then stirred for 1 minute.
(3) After the measurement of the mass of an iron plate, the resulting aqueous solution is applied to one side of the iron plate and squeezed with a rubber roll.
(4) The coated iron plate is dried at 500 °C for 30 seconds in an electric furnace.
(5) The operations (3) and (4) are repeated again.
(6) The mass of the coated iron plate is measured (chemical balance) (after about 10 minutes).
(7) The iron plate is attached to a vibrator, and 400 g of sand is put into the vibrator.
(8) The vibrator is attached to a low tap shaking apparatus to shake the iron plate for 30 seconds.
(9) The mass of the iron plate is measured.

2. Equipment conditions and the like

a. Iron plate: 150 mm in length x 80 mm in width x 0.3 mm in thickness
b. Mixer: Mixer (MX-934G) of Toshiba Corporation
c. Rubber roll: grooved rubber roll
d. Low tap: 290 rpm (manufactured by Iida Seisakusho Japan Corporation) (no spot)
e. Sand: 20 to 40 mesh

3. Calculation

$$(((9) - X)g \div ((6) - X)g) \times 100 = \text{adhesion strength (\%)}$$

$$X: \text{mass of iron plate before coating}$$

Standard amount of coating: 10.5 g/m$^2$

(h) Method of measuring CAA (Citric Acid Activity)

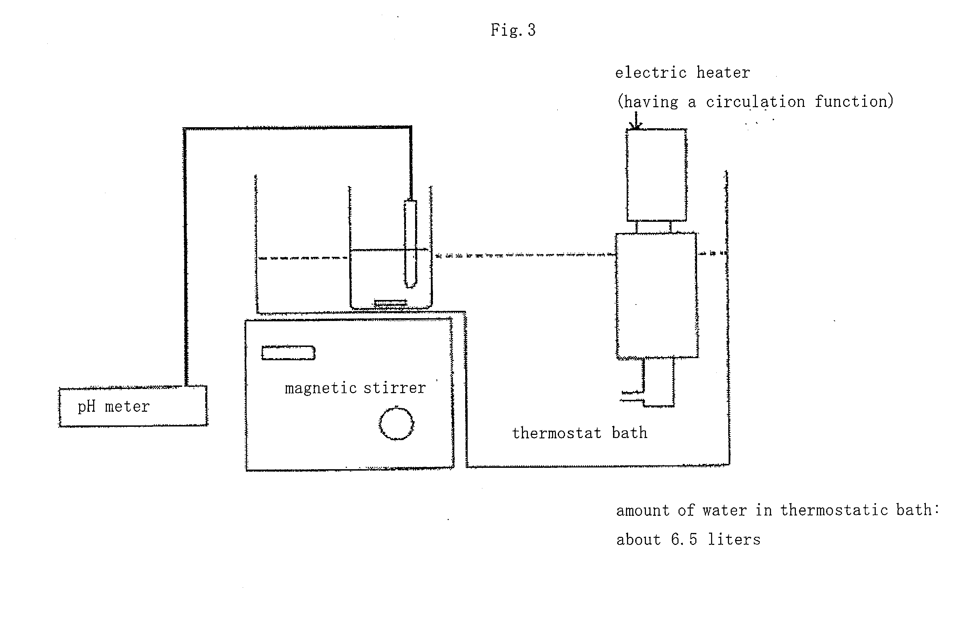

CAA was measured by the following method. A stirrer equipped with a thermostat bath shown in Fig. 3 was prepared, and its temperature was adjusted to $30\pm1°C$ in advance (using a mercury thermometer). 100 mL of a citric acid solution having a concentration of 2/15 mol/L was put into a 200-mL beaker accurately (dispensing burette), its temperature was adjusted to $30\pm1°C$ (using a mercury thermometer) by an electric heater, and the heated solution was put into the thermostat bath. Then, a rotor (8 mm in diameter x 35 mm in length, plastic exterior) was placed into the thermostat bath and positioned at a place where it rotated smoothly (revolution: 910 rpm) to immerse a pH electrode therein.

The sample was weighed by a chemical balance from Table 1 below.

Table 1

| Reactivity | amount of MgO sample |
| --- | --- |
| 40% | 2.0g |
| 60% | 1.3g |
| 70% | 1.15g |
| 80% | 1.0g |

The weighed sample was injected into a beaker. At the same time, a chronograph was pressed to switch on a magnetic stirrer after exactly 10 seconds to turn a rotor. When pH became 8.0 as the end point (colored pink), the chronograph was stopped to read the time.

2. Production of magnesium oxide particles

After magnesium nitrate and ammonium water were reacted with each other in an equivalent ratio of 1:1.8 at 30°C, the reaction product was hydrothermally treated at 100°C, filtered, rinsed and dried to obtain magnesium hydroxide having a BET specific surface area of 29 m$^2$/g and a particle diameter %50 of 13 $\mu$m.

This magnesium hydroxide was calcined in a rotary kiln at 950°C to obtain magnesium oxide. This magnesium oxide was ground with a hammer mill.

When the obtained magnesium oxide particles were measured by a scanning probe microscope (OLS3500 type of Olympus Corporation), the aspect ratio was 4.4.

The %90 value of the magnesium oxide particles obtained by measuring their powders in a water solvent by the laser diffraction scattering method was 24.6 $\mu$m, the %10 value measured after an ultrasonic treatment was 0. 9 $\mu$m, and their ratio was 27.

In an adhesion strength test, the average value of four measurement data of the magnesium oxide particles as a comparative example was 19.61 % whereas the average value of four measurement data of the magnesium oxide particles of example was 91.6 %. Thus, the magnesium oxide particles of example showed extremely high adhesion. This is considered to be that the aspect ratio of the magnesium oxide particles of example was high and intermolecular force between the iron plate and the magnesium oxide particles became large, resulting in high adhesion.

The obtained magnesium oxide particles and magnesium oxide particles having an aspect ratio of around 1 as a comparative example are shown in Table 2 below. The aggregation property and dispersibility of these particles were evaluated by Non-US%90/3'US %10 value.

Table 2

| Type of MgO | Example | Comparative Example |
|---|---|---|
| Aspect ratio | 4.4 | around 1 |
| Non-US %90/3' US %10 | 27 | 13 |
| BET specific surface area ($m^2$/g) | 14 | 19 |
| CAA (Citric Acid Activity) 40%(sec) | 75 | 60 |
| Bulk specific gravity (g/mL) | 0.22 | 0.29 |
| Note) Non-US %90/3' US %10: the ratio of the %90 value of the particle size measured in a water solvent and the %10 value of the particle size after ultrasonic treatment in a water solvent | | |

Effect of the Invention

When the magnesium oxide particles of the present invention are mixed with a synthetic resin, ceramic or coating agent, they are not so bulky and viscous and therefore have high dispersibility. Therefore, they have extremely high workability.

Industrial Applicability

The magnesium oxide particles of the present invention may be used in thin film electronic materials, ceramics for optical use and dielectric ceramics.

**Claims**

1. Magnesium oxide particles having an aspect ratio measured by a scanning probe microscope of 3 to 10.

2. The magnesium oxide particles according to claim 1, wherein the ratio of the %90 value of the particle size measured in a water solvent to the %10 value of the particle size measured after an ultrasonic treatment in a water solvent by a laser diffraction scattering method is 15 or more.

3. The magnesium oxide particles according to claim 1 which have a BET Specific surface area of 5 to 30 $m^2$/g.

4. The magnesium oxide particles according to claim 1 which have a 40 % value of CAA (Citric Acid Activity) at 30°C of 40 to 120 seconds.

5. The magnesium oxide particles according to claim 1 which have a bulk specific gravity of 0.15 to 0.35 g/mL.

6. A process for producing magnesium oxide, comprising the steps of:

    (i) reacting magnesium nitrate with ammonia water in an equivalent ratio of 0.5 to 3.0 at 15 to 50°C and heating the reaction product at 55 to 99°C or hydrothermally treating the reaction product at 100 to 150°C to obtain magnesium hydroxide; and
    (ii) calcining the obtained magnesium hydroxide.

Fig. 1

Fig. 2

Fig. 3

electric heater
(having a circulation function)

magnetic stirrer

pH meter

thermostat bath

amount of water in thermostatic bath:
about 6.5 liters

EP 2 896 599 A1

## INTERNATIONAL SEARCH REPORT

| International application No. |
|---|
| PCT/JP2013/075391 |

A.   CLASSIFICATION OF SUBJECT MATTER
*C01F5/08*(2006.01)i, *C01F5/20*(2006.01)i, *C08K3/22*(2006.01)n

According to International Patent Classification (IPC) or to both national classification and IPC

B.   FIELDS SEARCHED

Minimum documentation searched (classification system followed by classification symbols)
C01F5/08, C01F5/20, C08K3/22

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2-141418 A (Kyowa Chemical Industry Co., Ltd.), 30 May 1990 (30.05.1990), claims; examples 4 to 6; table 3 & EP 370728 A1          & DE 68920708 C & DE 68920708 D          & ES 2069594 T & CA 2003320 A          & CA 2003320 A1 | 1-6 |
| X | JP 61-36119 A (Asahi Glass Co., Ltd.), 20 February 1986 (20.02.1986), claims; pages 2 to 4 (Family: none) | 1-6 |

☒   Further documents are listed in the continuation of Box C.         ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 November, 2013 (05.11.13) | 12 November, 2013 (12.11.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2013/075391 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-73951 A  (Tateho Chemical Industries Co., Ltd.), 14 April 2011 (14.04.2011), entire text & US 2012/0189850 A1     & WO 2011/040593 A1 & CN 102712491 A        & KR 10-2012-0093176 A | 1-6 |
| A | JP 2012-72004 A  (Tateho Chemical Industries Co., Ltd.), 12 April 2012 (12.04.2012), entire text (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58060616 A
- JP 61209911 A
- JP 2012089470 A

**Non-patent literature cited in the description**

- **TOKUJI TAKAGI.** *Catalyst,* 1960, vol. 2 (4), 473